# EUROPEAN PATENT APPLICATION

(11) **EP 4 644 296 A1**
(43) Date of publication of application: **05.11.2025**
(21) Application number: 23921273.1
(22) Date of filing: 25.10.2023
(51) Int. Cl.: B65G 1/14

(54) **RACK OF AUTOMATED WAREHOUSE**

(30) Priority: 10.02.2023 JP 2023019078
(71) Applicant: Murata Machinery, Ltd., Kyoto-shi, Kyoto 601-8326 (JP)
(72) Inventor: TAMAOKI Mitsuru, Kyoto-shi, Kyoto 612-8686 (JP); KASUGAI Mutsumi, Kyoto-shi, Kyoto 612-8686 (JP)
(74) Representative: Weickmann & Weickmann PartmbB
(86) International application number: PCT/JP2023/038558
(87) International publication number: WO 2024/166449

(57) **Abstract**

A rack (10) of an automated warehouse (1) includes a first horizontal beam member (13), a second horizontal beam member (15), and a shelf member (20). The first horizontal beam member (13) has a pair of beam holes (130). The pair of beam holes (130) penetrate through a rear side surface (13D) so as to form projecting portions projecting in directions facing each other. The second horizontal beam member (15) has an engaged portion to be engaged by one end portion of the shelf member (20) and an insertion hole (15Af) penetrating through a second upper surface in a thickness direction. The shelf member (20) includes a support surface (21), a first projecting piece (22), an insertion surface (23) having an engaging hole (23A) into which the projecting portion (133) is engaged when being inserted into the beam hole (130), a rear engaging portion (29), and a latch portion (29D) inserted into the insertion hole (15Af) in a state where the second horizontal beam member (15) is engaged by the rear engaging portion (29).

## Description

### Technical Field

One aspect of the present invention relates to a rack of an automated warehouse that is used in an automated warehouse or the like and holds a cargo.

### Background Art

The rack that is used in the automated warehouse or the like and holds the cargo is known. For example, Patent Literature 1 discloses a rack of an automated warehouse including four pillars erected at four corners of a rectangle, two beam members arranged parallel to each other at front and rear of the four pillars in a left-right direction, and shelf members bridged between the two beam members. In the rack of an automated warehouse disclosed in Patent Literature 1, one of the beam members and one end of the shelf member in a front-rear direction are engaged to fix each other. This facilitates construction as compared with fixing each other using a fastening member such as a bolt.

### Citation List

### Patent Literature

Patent Literature 1: Japanese Unexamined Patent Publication No. 2021-046271

### Summary of Invention

### Technical Problem

However, in the conventional rack of an automated warehouse described above, it is easy to fix one end of the shelf member in the front-rear direction to one of the beam members, but if the fastening member such as the bolt is used as a means for fixing the other end of the shelf member in the front-rear direction to the other of the beam members, the efficiency is reduced by half. Further, when the shelf member is engaged and fixed to both beam members, it is necessary to be able to suppress movement in any of three axial directions orthogonal to each other.

Therefore, an object of one aspect of the present invention is to provide a rack of an automated warehouse capable of suppressing movement of the shelf member in any of three axial directions orthogonal to each other with respect to the beam member while having the engaging and fixing structure.

### Solution to Problem

The rack of an automated warehouse according to one aspect of the present invention is a rack of an automated warehouse extending in a first direction, capable of arranging a plurality of cargoes in the first direction, and capable of transferring the cargoes from one side in a second direction orthogonal to the first direction in a horizontal direction, the rack including: a first horizontal beam member extending in the first direction; a second horizontal beam member extending in the first direction, disposed to face the first horizontal beam member in the second direction, and disposed on the other side in the second direction with respect to the first horizontal beam member; and a shelf member disposed to span between the first horizontal beam member and the second horizontal beam member and holding the cargo, in which the first horizontal beam member includes a first upper surface inclined downward from the one side toward the other side, a rear side surface extending downward from an end portion of the first upper surface on the other side and orthogonal to the second direction, and a pair of beam holes penetrating in a thickness direction across the first upper surface and the rear side surface, the pair of beam holes penetrating through the rear side surface so as to form projecting portions projecting in directions facing each other, the second horizontal beam member includes an engaged portion to be engaged by one end portion of the shelf member and an insertion hole penetrating through a second upper surface orthogonal to a vertical direction in a thickness direction, and the shelf member is formed by bending a plate-like member, and includes: a support surface configured to support the cargo from below; a first projecting piece provided to project to the one side from an end portion on the one side of the support surface and in being contact with the first upper surface of the first horizontal beam member; a pair of insertion surfaces respectively formed to be insertable into the pair of beam holes in the first horizontal beam member, the pair of insertion surfaces each being formed with an engaging hole into which each of the projecting portions is engaged when the pair of insertion surfaces are respectively inserted into the pair of beam holes; a rear engaging portion engaging the engaged portion of the second horizontal beam member; and a latch portion inserted into the insertion hole in a state where the engaged portion of the second horizontal beam member is engaged by the rear engaging portion.

In the rack of an automated warehouse having this configuration, the shelf members are fixed to the first horizontal beam member and the second horizontal beam member by the following first fixing structure to fourth fixing structure. The first fixing structure is a structure in which the shelf member is fixed to the first horizontal beam member in the first direction by inserting (engaging) the insertion surface of the shelf member into the beam hole of the first horizontal beam member. The second fixing structure is a structure in which the shelf member is fixed to the first horizontal beam member in the second direction and the vertical direction (direction orthogonal to both the first direction and the second direction) by engaging the engaging hole formed in the insertion surface to the projecting portion formed in the first horizontal beam member. The third fixing structure is a structure in which the shelf member is fixed to the second horizontal beam member in the vertical direction by engaging the engaged portion of the second horizontal beam member with the engaging portion of the shelf member. The fourth fixing structure is a structure in which the shelf member is fixed to the second horizontal beam member in the first direction and the second direction by inserting (engaging) the latch portion formed on the shelf member into the insertion hole formed in the second horizontal beam member. In the rack of an automated warehouse according to one aspect of the present invention, since positioning actions by the four fixing structures of the first fixing structure to the fourth fixing structure are combined, movement of the shelf member is suppressed in any of the first direction, the second direction, and the vertical direction with respect to both the beam members of the first horizontal beam member and the second horizontal beam member. That is, the movement of the shelf member can also be suppressed in any of the three axial directions orthogonal to each other with respect to the beam member without using the fastening member such as the bolt, while having the engaging and fixing structure.

In the rack of an automated warehouse according to one aspect of the present invention, the first projecting piece may have a first surface inclined upward from an end portion on the one side of the support surface toward the one side, and a second surface inclined downward from an end portion on the one side of the first surface toward the one side, and the second surface may be in contact with the first upper surface of the first horizontal beam member. With this configuration, it is possible to suppress jumping out of the cargo held by the shelf member to the one side.

In the rack of an automated warehouse according to one aspect of the present invention, the second surface and the first upper surface may be in contact with each other such that an inclination direction of the second surface and an inclination direction of the first upper surface intersect each other. In other words, the second surface and the first upper surface do not come into contact with each other in a state where the inclination direction of the second surface and the inclination direction of the first upper surface are parallel to each other. With this configuration, it is possible to effectively suppress the movement of the shelf member in the second direction when the cargo is transferred.

In the rack of an automated warehouse according to one aspect of the present invention, the rear engaging portion may include a first engaging surface extending in the second direction, a second engaging surface extending downward in the vertical direction from an end portion on the other side of the first engaging surface, and a third engaging surface extending toward the one side in the second direction from an end portion on a lower side in the vertical direction of the second engaging surface, and the third engaging surface may be inclined downward from the other side toward the one side. With this configuration, it is easy to attach the shelf member to the second horizontal beam member while suppressing the movement of the shelf member in the first direction using an elastic force of a flat plate member formed of metal.

In the rack of an automated warehouse according to one aspect of the present invention, a plurality of the shelf members may be arranged at intervals in the first direction, the shelf members may include the support surfaces provided in a pair such that a first support surface and a second support surface face each other in the first direction, and a guide surface formed between the first support surface and the second support surface in the first direction, projecting upward from the first support surface and the second support surface, and extending in the second direction, and the guide surface may be formed by bending a plate-like member between the first support surface and the second support surface in the first direction. The shelf members having this configuration hold the cargo by supporting an end portion on one side of the cargo in the first direction from below by the first support surface of one of the shelf members adjacent to each other, and supporting an end portion on the other side of the cargo in the first direction from below by the second support surface of the other of the shelf members adjacent to each other. In addition, in the shelf member having this configuration, it is possible to prevent the cargo from being displaced in the first direction by the guide surface.

In the rack of an automated warehouse according to one aspect of the present invention, the shelf members each may have second projecting pieces projecting to one side and the other side in the first direction from an end portion of the guide surface on the other side in the second direction. With this configuration, it is possible to prevent the cargo from jumping out from the other side in the second direction.

### Advantageous Effects of Invention

According to one aspect of the present invention, it is possible to suppress the movement of the shelf member in any of the three axial directions orthogonal to each other with respect to the beam member while having the engaging and fixing structure.

### Brief Description of Drawings

FIG. 1 is a perspective view illustrating a part of a rack used in an automated warehouse according to an embodiment.
FIG. 2 is a side view of a part of the automated warehouse according to the embodiment as viewed from an X direction.
FIG. 3 is a perspective view illustrating a shelf member included in the rack of FIG. 1.
FIG. 4 is a sectional view of the rack in FIG. 1 as viewed from the X direction.
FIG. 5(A) is a perspective view of a connection portion between a first horizontal beam member and the shelf member as viewed obliquely from above. FIG. 5(B) is a perspective view of the connection portion between the first horizontal beam member and the shelf member as viewed obliquely from below.
FIG. 6 is a developed view in which a beam hole portion formed in the first horizontal beam member is developed in plane.
FIG. 7 is a perspective view of a connection portion between a second horizontal beam member and the shelf member as viewed obliquely from above.
FIGS. 8(A) and 8(B) are views for explaining a procedure when the shelf member is attached to the second horizontal beam member.
FIGS. 9(A) and 9(B) are views for explaining a procedure when the shelf member is attached to the first horizontal beam member.

### Description of Embodiments

Hereinafter, a rack 10 (rack of automated warehouse) according to an embodiment will be described with reference to the drawings. In description of the drawings, the same elements are denoted by the same reference numerals, and redundant description will be omitted. In the present embodiment, for convenience of description, an extending direction of the rack 10 is defined as an X direction (a first direction), a direction orthogonal to the X direction on a horizontal plane is defined as a Y direction (a second direction), and a direction orthogonal to both the X direction and the Y direction is defined as a Z direction (a vertical direction).

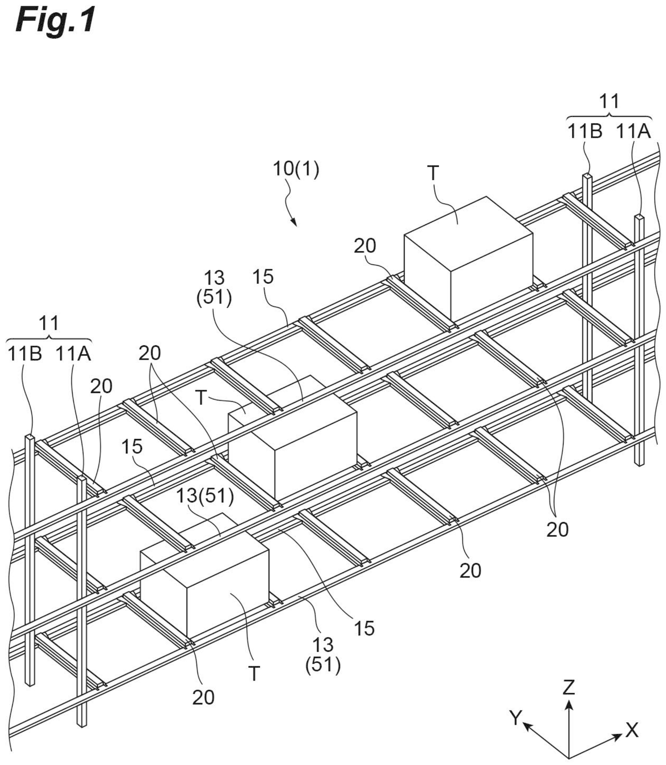

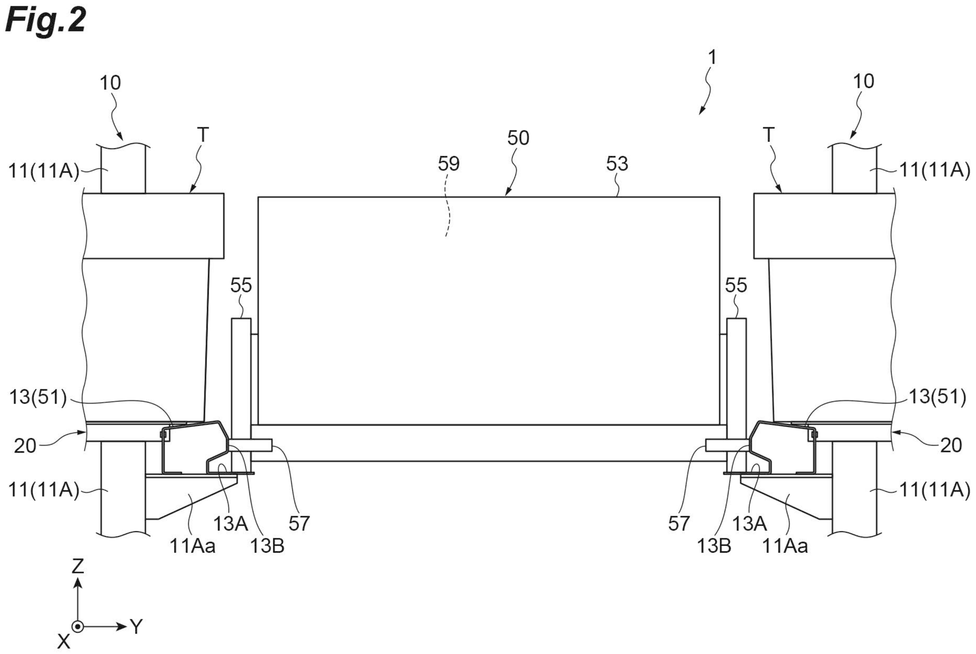

As illustrated in FIGS. 1 and 2, an automated warehouse 1 is a facility that can automatically carry a cargo T from an outside of the automated warehouse 1 into the rack 10 and automatically carry the cargo T held in the rack 10 to the outside of the automated warehouse 1 using a first conveyance device 50 capable of conveying the cargo T in a horizontal direction and a second conveyance device (not illustrated) capable of conveying the cargo T in the vertical direction.

The automated warehouse 1 includes a pair of racks 10 and 10, the first conveyance device 50, and the second conveyance device (not illustrated). Each of the pair of racks 10 and 10 can hold a plurality of the cargoes T arranged in the X direction which is one direction in the horizontal direction, and can hold a plurality of the cargoes T arranged in the Z direction which is the vertical direction. Hereinafter, an array in the Z direction may be referred to as a "stage". Note that details of a configuration of the pair of racks 10 and 10 will be described later.

The first conveyance device 50 is disposed at each stage in the X direction between the pair of racks 10 and 10 arranged opposite to each other in the Y direction. The first conveyance device 50 is not particularly limited as long as it is a device capable of conveying the cargoes T held and transferring the cargoes T with respect to the rack 10. The first conveyance device 50 of the present embodiment includes a pair of rails 51 and 51 and a traveling carriage 53 that travels on the pair of rails 51 and 51.

The pair of rails 51 and 51 are arranged to face each other in the Y direction and extends in the X direction. Note that the pair of rails 51 and 51 are constituted by first horizontal beam members 13 of the racks 10 and 10 described later in detail. The traveling carriage 53 includes a pair of traveling rollers 55 and 55 that roll on first guide surfaces 13A and 13A of a pair of first horizontal beam members 13 and 13 (the pair of rails 51 and 51), a pair of side rollers 57 and 57 that roll on second guide surfaces 13B and 13B of the pair of first horizontal beam members 13 and 13 (the pair of rails 51 and 51), and a transfer device 59 that transfers the cargo T from the traveling carriage 53 to the rack 10 and from the rack 10 to the traveling carriage 53 while sliding the cargo T. The pair of traveling rollers 55 and 55 are driven by a drive unit such as a motor (not illustrated) . The transfer device 59 includes, for example, an arm portion (not illustrated) that can push out the cargo T to the rack 10 side or pull in the cargo T from the rack 10 side.

The second conveyance device is disposed in the Z direction at an end portion in the X direction of each of the pair of racks 10 and 10. The second conveyance device is not particularly limited as long as it is a device capable of conveying the cargo T held and transferring the cargo T between each stage of the rack 10 and a conveyance device (not illustrated) outside the automated warehouse 1. The second conveyance device is, for example, a vertical conveyor that conveys the cargo T in the Z direction.

The rack 10 includes pillar members 11, first horizontal beam members 13, second horizontal beam members 15, and shelf members 20.

The pillar members 11 are columnar members erected on a floor surface, a foundation, or the like of a building in which the automated warehouse 1 is installed. The pillar members 11 extend in the Z direction and are arranged in the X direction at predetermined intervals. The pillar members 11 are configured to include first pillar members 11A arranged on one side in the Y direction and second pillar members 11B arranged on the other side in the Y direction.

The first horizontal beam member 13 is a beam member extending in the X direction along an arrangement direction of the first pillar members 11A. A plurality of first horizontal beam members 13 are arranged in the Z direction. The first horizontal beam member 13 is provided corresponding to each stage described above. The first horizontal beam members 13 are fixed to the first pillar members 11A via a bracket 11Aa provided on the respective first pillar member 11A.

The second horizontal beam member 15 is a beam member extending in the X direction along an arrangement direction of the second pillar members 11B. The second horizontal beam members 15 are disposed to face the first horizontal beam members 13 in the Y direction. Further, a plurality of second horizontal beam members 15 are arranged in the Z direction. The second horizontal beam members 15 are provided corresponding to each stage described above. The second horizontal beam members 15 are fixed to the second pillar members 11B via a bracket (not illustrated) provided on the respective second pillar member 11B.

Hereinafter, when a view of the rack 10 in which the second horizontal beam member 15 appears to be further back than the first horizontal beam member 13 is defined as a front view, one side in the Y direction in the front view (that is, a side on which the first horizontal beam member 13 is disposed) may be referred to as a front side, and the other side in the Y direction (that is, a side on which the second horizontal beam member 15 is disposed) may be referred to as a rear side.

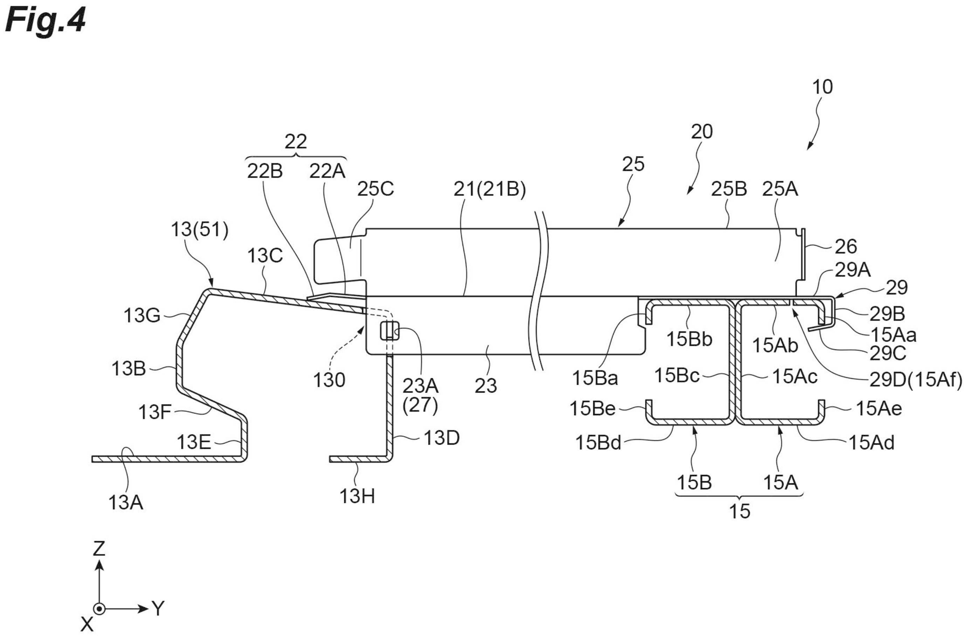

The first horizontal beam member 13 will be described in more detail. As illustrated in FIGS. 2 to 4, the first horizontal beam member 13 has the first guide surface 13A, the second guide surface 13B, an upper surface (a first upper surface) 13C, a rear side surface 13D, a first connection surface 13E, a second connection surface 13F, a third connection surface 13G, and a lower surface 13H. In the first horizontal beam member 13, a plate-like member formed of a material such as a steel material, an aluminum material, or a stainless steel material is bent by press working or the like to form each part of the first guide surface 13A, the second guide surface 13B, the upper surface 13C, the rear side surface 13D, the first connection surface 13E, the second connection surface 13F, the third connection surface 13G, and the lower surface 13H.

As described above, the first horizontal beam member 13 together with the first horizontal beam member 13 of the rack 10 disposed to face each other in the Y direction constitutes the pair of rails 51 and 51 of the first conveyance device 50. The first guide surface 13A constitutes a surface on which the traveling roller 55 of the first conveyance device 50 can roll. The first guide surface 13A is a surface orthogonal to the Z direction and parallel to the horizontal plane. The second guide surface 13B constitutes a surface on which the side roller 57 of the first conveyance device 50 can roll. The second guide surface 13B is a surface orthogonal to the Y direction and is a surface parallel to a vertical plane.

One end (a front end) of the shelf member 20 in the Y direction is placed on the upper surface 13C. The upper surface 13C is inclined downward from the front side (one side) toward the rear side (the other side) in the Y direction. The rear side surface 13D is a surface extending downward from a rear end of the upper surface 13C and is a surface orthogonal to the Y direction. The first connection surface 13E and the second connection surface 13F are surfaces connecting the first guide surface 13A and the second guide surface 13B. The third connection surface 13G is a surface connecting the second guide surface 13B and the upper surface 13C. In the first horizontal beam member 13, a beam hole 130 is formed from a part of the upper surface 13C to a part of the rear side surface 13D. The beam hole 130 is a portion into which an insertion surface 23 of the shelf member 20 described later in detail is inserted. The beam hole 130 will be described in detail later.

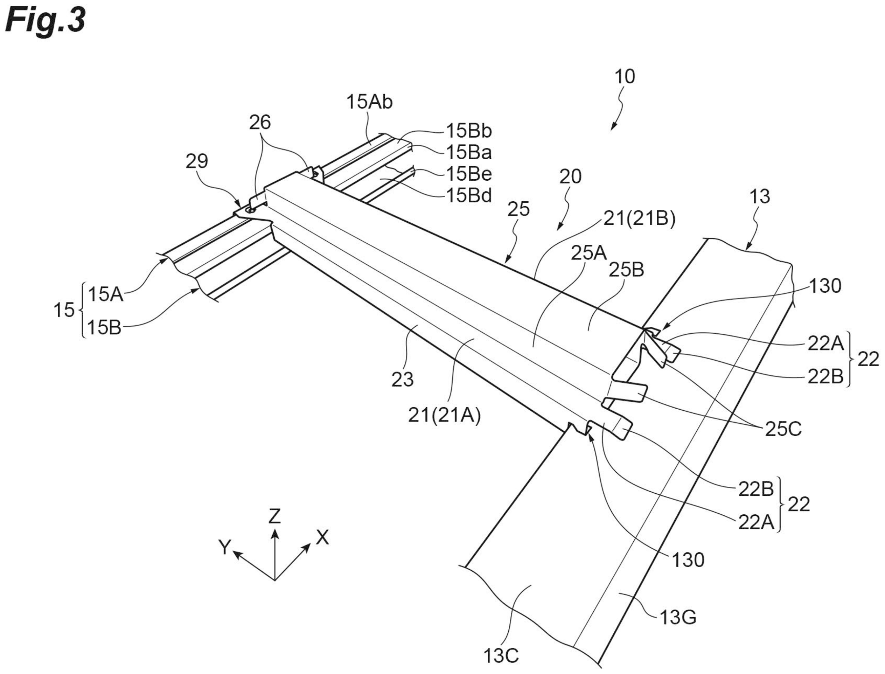

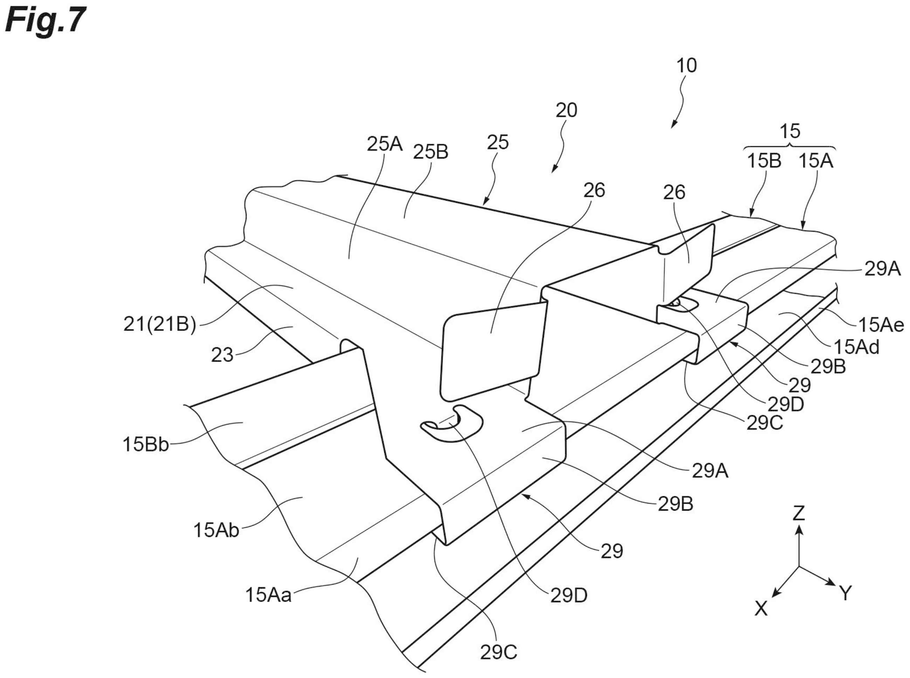

Next, the second horizontal beam member 15 will be described in more detail. As illustrated in FIGS. 3 to 7, the second horizontal beam member 15 is constituted by a first lip channel steel 15A and a second lip channel steel 15B. The first lip channel steel 15A includes an upper lip (an engaged portion) 15Aa, an upper flange (an engaged portion/a second upper surface) 15Ab, a web 15Ac, a lower flange 15Ad, and a lower lip 15Ae. In the first lip channel steel 15A, a plate-like member formed of a material such as a steel material, an aluminum material, or a stainless steel material is bent by press working or the like to form each part of the upper lip 15Aa, the upper flange 15Ab, the web 15Ac, the lower flange 15Ad, and the lower lip 15Ae.

The upper flange 15Ab is a portion to be an upper surface (the second upper surface) of the second horizontal beam member 15. The upper flange 15Ab is formed with an insertion hole 15Af into which a latch portion 29D formed on the shelf member 20 described later in detail can be inserted. The upper lip 15Aa is a portion hanging downward from a rear end of the upper flange 15Ab. The lower flange 15Ad is a portion to be a lower surface of the second horizontal beam member 15. The web 15Ac is a portion connecting the upper flange 15Ab and the lower flange 15Ad and extending in the Z direction. The lower lip 15Ae is a portion erected upward from a rear end of the lower flange 15Ad.

The second lip channel steel 15B includes an upper lip 15Ba, an upper flange 15Bb, a web 15Bc, a lower flange 15Bd, and a lower lip 15Be. In the second lip channel steel 15B, a plate-like member formed of a material such as a steel material, an aluminum material, or a stainless steel material is bent by press working or the like to form each part of the upper lip 15Ba, the upper flange 15Bb, the web 15Bc, the lower flange 15Bd, and the lower lip 15Be.

The upper flange 15Bb is a portion to be an upper surface of the second horizontal beam member 15. The upper lip 15Ba is a portion hanging downward from a front end of the upper flange 15Bb. The lower flange 15Bd is a portion to be a lower surface of the second horizontal beam member 15. The web 15Bc is a portion connecting the upper flange 15Bb and the lower flange 15Bd and extending in the Z direction. The lower lip 15Be is a portion erected upward from a front end of the lower flange 15Bd.

The first lip channel steel 15A and the second lip channel steel 15B are arranged in a back-to-back state (back-to-back) such that the web 15Ac and the web 15Bc are in contact with each other. The first lip channel steel 15A and the second lip channel steel 15B are connected to each other by means such as bolts and rivets or welding. The first lip channel steel 15A has a portion to which a rear engaging portion 29 of the shelf member 20 described later in detail is engaged.

The shelf member 20 is a member for holding (placing) the cargo T. The shelf member 20 is bridged between the first horizontal beam member 13 and the second horizontal beam member 15. The shelf members 20 are arranged at predetermined intervals in the X direction. The cargo T is placed to straddle one shelf member 20 and the other shelf member 20 adjacent to each other in the X direction.

The shelf member 20 includes a support surface 21, a first projecting piece 22, an insertion surface 23, a guide surface 25, a second projecting piece 26, and a rear engaging portion 29. In the shelf member 20, a plate-like member formed of a material such as a steel material, an aluminum material, or a stainless steel material is bent by press working or the like to form each part of the support surface 21, the first projecting piece 22, the insertion surface 23, the second projecting piece 26, the guide surface 25, and the rear engaging portion 29.

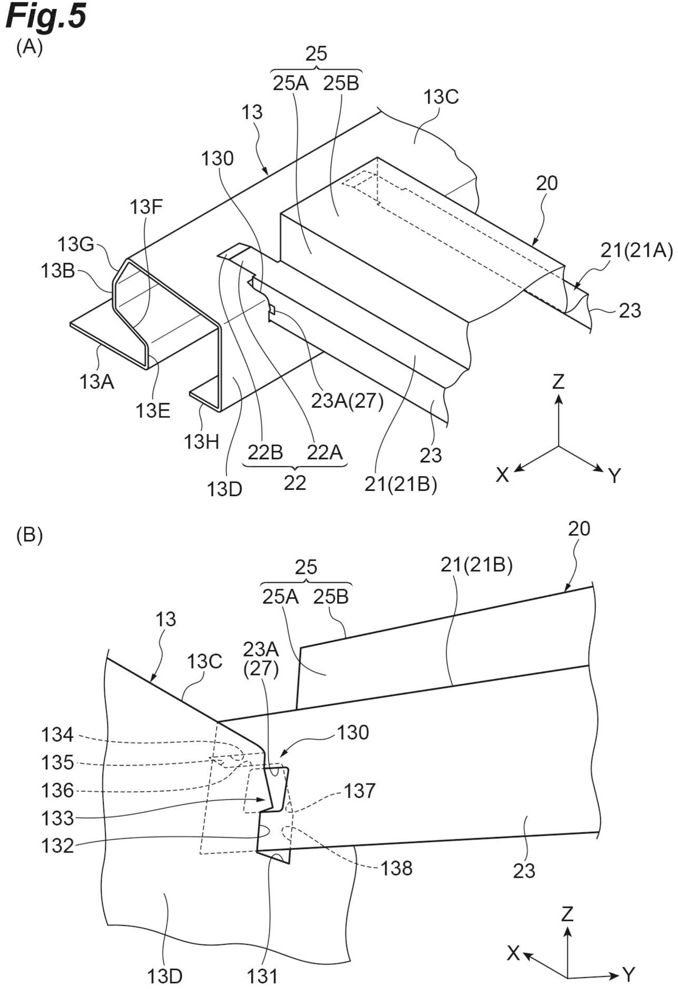

The support surface 21 is a portion for supporting the cargo T from below. That is, the support surface 21 is a surface on which the cargo T is placed. The support surface 21 has a first support surface 21A and a second support surface 21B forming a pair so as to sandwich the guide surface 25 in the X direction (see FIG. 5(A)). That is, the support surface 21 has the first support surface 21A disposed on one side (left side) in the X direction of the guide surface 25 and the second support surface 21B disposed on the other side (right side) in the X direction of the guide surface 25. Each of the pair of support surfaces 21 and 21 (the first support surface 21A and the second support surface 21B) is a surface orthogonal to the Z direction, and is a flat surface formed along the guide surface 25 extending in the Y direction.

The first projecting piece 22 is a portion projecting forward from a front end in the Y direction of the support surface 21. The first projecting piece 22 has a first surface 22A inclined upward from a front end of the support surface 21 toward the front side, and a second surface 22B inclined downward from a front end of the first surface 22A toward the front side. An inclination direction of the second surface 22B and an inclination direction of the upper surface 13C are different from each other. That is, an extending direction of the second surface 22B in the Y direction and an extending direction of the upper surface 13C in the Y direction intersect each other and are not parallel to each other.

The insertion surface 23 is a surface hanging downward from an end in the X direction of each of the pair of support surfaces 21 and 21, and is a surface orthogonal to the X direction. Each of the pair of insertion surfaces 23 and 23 is inserted into the beam hole 130 of the first horizontal beam member 13 described later in detail. Each of the pair of insertion surfaces 23 and 23 is formed with an engaging hole 23A into which a projecting portion 133 formed in the beam hole 130 is inserted in a state where the insertion surface 23 is inserted into the beam hole 130. The engaging hole 23A is a portion penetrating through the insertion surface 23 in a thickness direction of the insertion surface 23. The engaging hole 23A is disposed below a central portion of the insertion surface 23 in the Z direction. An opening shape of the engaging hole 23A is not particularly limited, and is, for example, a rectangular shape.

The pair of insertion surfaces 23 and 23 gradually spread to be separated from each other downward from each of the pair of support surfaces 21 and 21 in a state before the shelf member 20 is attached to the first horizontal beam member 13 (in a state of part). When a force is applied to the pair of insertion surfaces 23 and 23 so as to bring the pair of insertion surfaces 23 and 23 close to each other, the pair of insertion surfaces 23 and 23 are deformed so that a distance between lower ends of the pair of insertion surfaces 23 and 23 decreases.

The guide surface 25 is a member that restricts movement of the cargo T placed on the shelf member 20 in the X direction, and is also a portion for guiding the cargo T in the Y direction while restricting the movement of the cargo T in the X direction when transferring the cargo T to the shelf member 20. The guide surface 25 has a pair of side surfaces 25A and 25A which are portions coming into contact with a part of side surfaces of the cargo T, and an upper surface 25B connecting the pair of side surfaces 25A and 25A. Each of the pair of side surfaces 25A and 25A further includes a front guide surface 25C. The pair of front guide surfaces 25C and 25C guide the cargo T from the upper surface 13C of the first horizontal beam member 13 to the support surface 21.

A pair of second projecting pieces 26 and 26 have surfaces orthogonal to the Y direction, and project from rear ends of the guide surface 25 in the Y direction to both one side (right side) and the other side (left side) in the X direction. The pair of second projecting pieces 26 and 26 restricts the cargo T from jumping out to the rear side in the Y direction from the support surface 21.

The rear engaging portion 29 is a portion for engaging the shelf member 20 to the second horizontal beam member 15. When the first lip channel steel 15A (engaged portion) of the second horizontal beam member 15 is engaged by the rear engaging portion 29, the shelf member 20 is fixed in the vertical direction with respect to the second horizontal beam member 15 (third fixing structure). The rear engaging portion 29 is formed at a rear end of the shelf member 20 in the Y direction. The rear engaging portion 29 has a first engaging surface 29A, a second engaging surface 29B, a third engaging surface 29C, and a latch portion 29D. The first engaging surface 29A is a portion parallel to the upper flange 15Ab of the first lip channel steel 15A when the shelf member 20 is attached to the second horizontal beam member 15. The second engaging surface 29B is a portion parallel to the upper lip 15Aa of the first lip channel steel 15A when the shelf member 20 is attached to the second horizontal beam member 15. The third engaging surface 29C is a portion extending forward from a lower end of the second engaging surface 29B. The third engaging surface 29C is inclined downward from the lower end of the second engaging surface 29B toward the front side. That is, the third engaging surface 29C is formed such that a distance from first engaging surface 29A increases toward the front side.

The latch portion 29D is a portion projecting downward from the first engaging surface 29A, and is formed to be insertable into the insertion hole 15Af formed in the upper flange 15Ab of the first lip channel steel 15A in the second horizontal beam member 15 when the shelf member 20 is attached to the second horizontal beam member 15. In a state where the latch portion 29D is inserted into the insertion hole 15Af, a rear portion of the shelf member 20 is fixed in the X direction and the Y direction (fourth fixing structure).

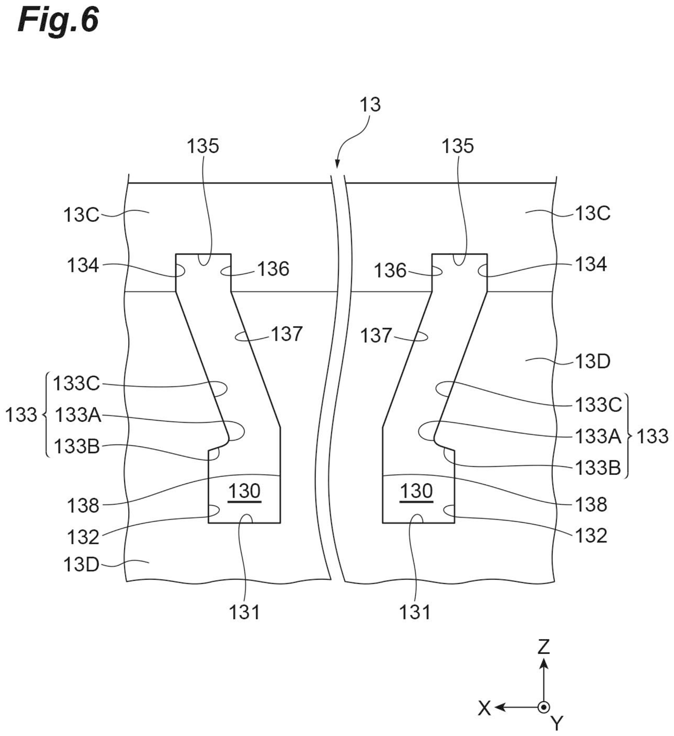

Next, a beam hole 130 formed in the first horizontal beam member 13 and for connecting the shelf member 20 to the first horizontal beam member 13 will be described. As illustrated in FIG. 6, beam holes 130 are arranged in a pair in the X direction. The pair of insertion surfaces 23 and 23 of the shelf member 20 are respectively formed to be insertable into the pair of beam holes 130 and 130.

Each of the pair of beam holes 130 and 130 is a portion penetrating from the part of the upper surface 13C to the part of the rear side surface 13D in a thickness direction of the first horizontal beam member 13. Each of the pair of beam holes 130 and 130 is opened upward from the part of the upper surface 13C to the part of the rear side surface 13D when the first horizontal beam member 13 is viewed from above in the Z direction. Each of the pair of beam holes 130 and 130 (hereinafter, simply referred to as a beam hole 130) has a lower end portion 131, a first side edge portion 132, the projecting portion 133, a second side edge portion 134, an upper end portion 135, a third side edge portion 136, a fourth side edge portion 137, and a fifth side edge portion 138, which form an inner edge forming the beam hole 130.

The lower end portion 131 is a portion formed on the rear side surface 13D and extending in the X direction at an inner edge lower end forming the beam hole 130. The first side edge portion 132 is a portion formed on the rear side surface 13D and extending in the Z direction. The projecting portion 133 is a portion formed on the rear side surface 13D and projecting from the first side edge portion 132 toward an inside of the beam hole 130 at a position separated upward from the lower end portion 131. The most projecting portion 133A of the projecting portion 133 is disposed below a central portion of the beam hole 130 in the Z direction. The projecting portion 133 has a lower end edge 133B rising toward the most projecting portion 133A and an upper end edge 133C falling toward the most projecting portion 133A.

The second side edge portion 134 is a portion formed on the upper surface 13C and extending in the Y direction at an inner edge upper end forming the beam hole 130. The upper end portion 135 is a portion formed on the upper surface 13C and extending in the X direction at the inner edge upper end forming the beam hole 130. The third side edge portion 136 is a portion formed on the upper surface 13C and extending in the Y direction at the inner edge upper end forming the beam hole 130. The third side edge portion 136 faces the second side edge portion 134 in the X direction. The fourth side edge portion 137 is a portion formed on the rear side surface 13D and facing the upper end edge 133C in the X direction. The fifth side edge portion 138 is a portion formed on the rear side surface 13D and extending in the Z direction. The fifth side edge portion 138 connects the fourth side edge portion 137 and the lower end portion 131.

The pair of beam holes 130 and 130 are arranged such that the projecting portions 133 respectively included therein project inward from the first side edge portions 132 arranged on the outer side. In other words, the pair of beam holes 130 and 130 are arranged to be line-symmetric with each other.

Next, a state in which the insertion surface 23 of the shelf member 20 is inserted into the beam hole 130, that is, a state in which the front end (a front engaging portion 27) of the shelf member 20 is engaged to the first horizontal beam member 13 will be described. In a state where the insertion surface 23 is inserted into the beam hole 130, the shelf member 20 is fixed to the first horizontal beam member 13 in the X direction (first fixing structure). Further, in a state where the insertion surface 23 is inserted into the beam hole 130, the engaging hole 23A is in a state where the projecting portion 133 is inserted, the engaging hole 23A and the projecting portion 133 are engaged, and the shelf member 20 is fixed to the first horizontal beam member 13 in the Y direction and the Z direction (second fixing structure). Further, the lower end portion 131 of the beam hole 130 and a lower end edge 23C of the insertion surface 23 are in contact with each other. Thus, a position of the shelf member 20 with respect to the first horizontal beam member 13 is determined in the Z direction, and the shelf member 20 is stably held by the first horizontal beam member 13. Further, a lower end of the engaging hole 23A and the lower end edge 133B of the projecting portion 133 are in contact with each other. Thus, two upper and lower points are determined, and movement of the insertion surface 23 in the Z direction is suppressed.

A part of the insertion surface 23 above the engaging hole 23A is in contact with the third side edge portion 136 located on an opposite side of the first side edge portion 132 in the beam hole 130. Furthermore, a part of the insertion surface 23 below the engaging hole 23A is in contact with the first side edge portion 132 below the projecting portion 133. In one insertion surface 23, since both surfaces in the X direction are in contact with the inner edge of the beam hole 130, movement of the insertion surface 23 in the X direction is suppressed. More specifically, a distance between the first side edge portion 132 and the third side edge portion 136 in the X direction matches a thickness of the insertion surface 23 of the shelf member 20, and an outer surface of the insertion surface 23 below the engaging hole 23A is in close contact with the first side edge portion 132 extending in the vertical direction, and an inner surface of the insertion surface 23 above the engaging hole 23A is in close contact with the third side edge portion 136. The same applies to the insertion surface 23 disposed on the opposite side in the X direction. Thus, movement of the shelf member 20 with respect to the first horizontal beam member 13 in the X direction is suppressed.

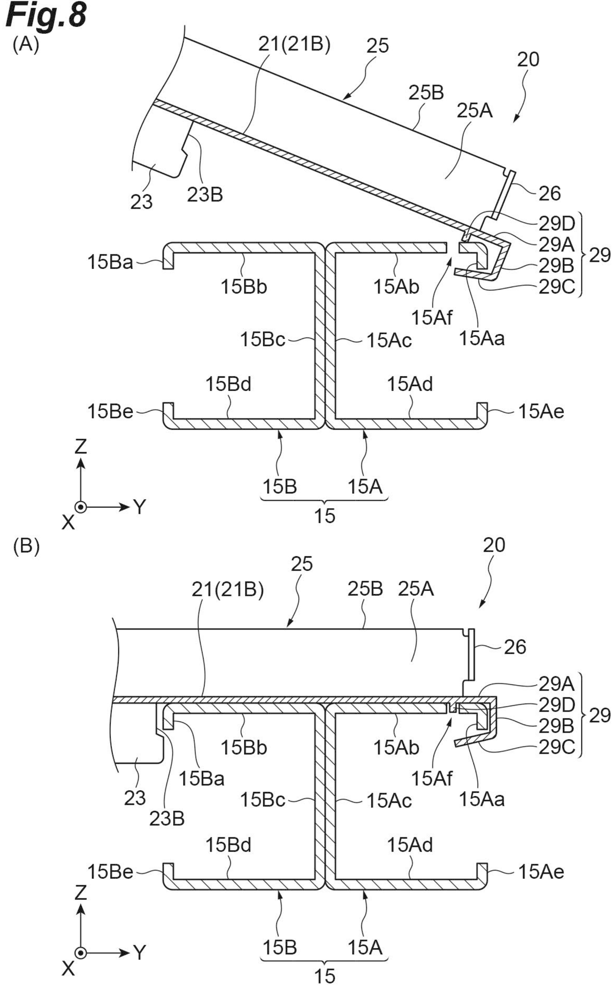

Next, a procedure for attaching the shelf member 20 to the first horizontal beam member 13 and the second horizontal beam member 15 will be described. First, a procedure for attaching a rear end portion of the shelf member 20 to the second horizontal beam member 15 will be described. As illustrated in FIG. 8(A), the rear engaging portion 29 formed at the rear end of the shelf member 20 is hooked on the second horizontal beam member 15. More specifically, the shelf member 20 is inclined such that the rear end of the shelf member 20 faces downward, and the third engaging surface 29C of the rear engaging portion 29 is moved below the lower lip 15Ae of the first lip channel steel 15A.

Subsequently, while the shelf member 20 is pulled toward the front side in the Y direction in a state where the rear engaging portion 29 is hooked on the second horizontal beam member 15, the shelf member 20 is laid down so as to be in a horizontal state. At this time, by inclining the shelf member 20 to the horizontal state while bringing a rear end portion 23B of the insertion surface 23 into contact with the upper lip 15Ba of the second lip channel steel 15B, the shelf member 20 can be roughly positioned with respect to the second horizontal beam member 15 in the Y direction.

Then, as illustrated in FIG. 8(B), when the shelf member 20 is inclined horizontally, the latch portion 29D of the rear engaging portion 29 is inserted into the insertion hole 15Af formed in the upper flange 15Ab of the first lip channel steel 15A in the second horizontal beam member 15. Thus, the rear end (rear engaging portion 29) of the shelf member 20 is positioned in the Z direction by the first engaging surface 29A, the second engaging surface 29B, the third engaging surface 29C, and the first lip channel steel 15A, and is positioned in the X direction and the Y direction by the latch portion 29D and the insertion hole 15Af.

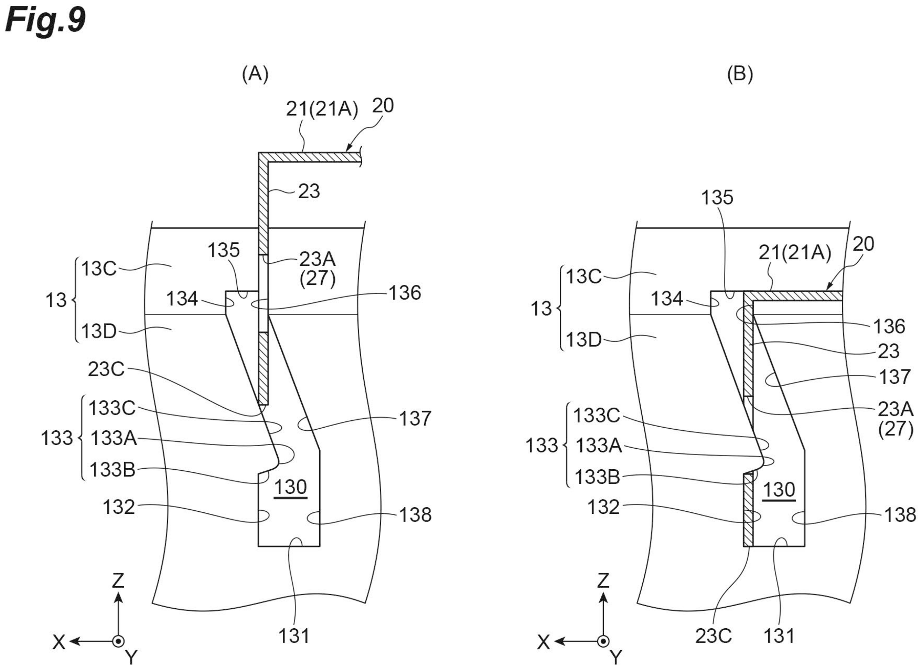

Subsequently, a procedure for attaching a front end portion of the shelf member 20 to the first horizontal beam member 13 will be described. As described above, when the shelf member 20 is laid down in the horizontal state, a front end portion of the insertion surface 23 of the shelf member 20 is inserted into the beam hole 130 formed in the first horizontal beam member 13 as illustrated in FIG. 9(A). In this state, by applying a downward force to the front end portion of the shelf member 20, the lower end edge 23C of the insertion surface 23 comes into contact with the upper end edge 133C of the projecting portion 133 in the beam hole 130. Then, when the insertion surfaces 23 and 23 are guided downward by the downward force, the insertion surfaces 23 deform in a direction (inward) of the pair of insertion surfaces 23 and 23 in the X direction.

Furthermore, when the downward force is applied to the front end of the shelf member 20, a lower end edge of the engaging hole 23A of the insertion surface 23 goes beyond the most projecting portion 133A of the projecting portion 133 and comes into contact with the first side edge portion 132. At this time, a part of the projecting portion 133 is inserted into the engaging hole 23A of the insertion surface 23, resulting in a state illustrated in FIG. 9(B). Note that the movement of the insertion surface 23 described above is similar in the other of the pair of insertion surfaces 23. Thus, the front end (front engaging portion 27) of the shelf member 20 is positioned in the X direction by the first side edge portion 132 of the beam hole 130 and the insertion surface 23, and is positioned in the Y direction and the Z direction by the projecting portion 133 of the beam hole 130 and the engaging hole 23A of the insertion surface 23. Now, the shelf member 20 can be attached to the first horizontal beam member 13 and the second horizontal beam member 15.

Note that a procedure of detaching the shelf member 20 from the first horizontal beam member 13 and the second horizontal beam member 15 is performed by a procedure reverse to the above attachment procedure. First, by applying a force in a direction (inner side) in which the pair of insertion surfaces 23 and 23 of the shelf member 20 approach each other, the projecting portion 133 is removed from a state of being inserted into the engaging hole 23A, and the front end of the shelf member 20 is lifted upward. Thus, engaging between the front end (front engaging portion 27) of the shelf member 20 and the first horizontal beam member 13 is released. Subsequently, the shelf member 20 is moved backward in a state where the shelf member 20 is inclined such that the rear end of the shelf member 20 faces downward. Thus, engaging between the rear end (rear engaging portion 29) of the shelf member 20 and the second horizontal beam member 15 is released. Now, the shelf member 20 can be detached from the first horizontal beam member 13 and the second horizontal beam member 15.

Functions and effects of rack 10 according to the above embodiment will be described. In the rack 10 of the above embodiment, the shelf members 20 are fixed to the first horizontal beam member 13 and the second horizontal beam member 15 by the first fixing structure to the fourth fixing structure described above. Note that the first fixing structure is a structure in which the shelf member 20 is fixed to the first horizontal beam member 13 in the X direction by inserting (engaging) the insertion surface 23 of the shelf member 20 into the beam hole 130 of the first horizontal beam member 13. The second fixing structure is a structure in which the shelf member 20 is fixed to the first horizontal beam member 13 in the Y direction and the Z direction by engaging the beam hole 130 formed in the insertion surface 23 to the projecting portion 133 formed in the first horizontal beam member 13. The third fixing structure is a structure in which the shelf member 20 is fixed to the second horizontal beam member 15 in the Z direction by engaging the engaged portion which is a part of the first lip channel steel 15A in the second horizontal beam member 15 with the rear engaging portion 29 of the shelf member 20. The fourth fixing structure is a structure in which the shelf member 20 is fixed to the second horizontal beam member 15 in the Y direction and the X direction by inserting (engaging) the latch portion 29D formed on the shelf member 20 into the insertion hole 15Af formed in the second horizontal beam member 15.

In the rack 10 of the above embodiment, since the positioning actions by the above-described four fixing structures are combined, the movement of the shelf member 20 is suppressed in any of the X direction, the Y direction, and the Z direction with respect to both the beam members of the first horizontal beam member 13 and the second horizontal beam member 15. That is, the movement of the shelf member 20 can also be suppressed in any of the three axial directions orthogonal to each other with respect to the first horizontal beam member 13 and the second horizontal beam member 15 without using a fastening member such as a bolt, while having the engaging and fixing structure.

In the rack 10 of the above embodiment, the first projecting piece 22 has the first surface 22A inclined upward from an end portion on one side of the support surface 21 toward the one side, and the second surface 22B inclined downward from an end portion on the one side of the first surface 22A toward the one side, and the second surface 22B is in contact with the upper surface 13C of the first horizontal beam member 13. Thus, it is possible to suppress jumping out of the cargo T held by the shelf member 20 to the front side.

In the rack 10 of the above embodiment, the second surface 22B and the upper surface 13C are in contact with each other such that the inclination direction of the second surface 22B and the inclination direction of the upper surface 13C intersect each other. In other words, in the above embodiment, the second surface 22B and the upper surface 13C do not come into contact with each other in such a manner that the inclination direction of the second surface 22B and the inclination direction of the upper surface 13C are parallel to each other. Thus, it is possible to effectively suppress the movement of the shelf member 20 to the front side in the Y direction when the cargo T is transferred.

In rack 10 of the above embodiment, the third engaging surface 29C of the rear engaging portion 29 is inclined downward from the rear side toward the front side. This makes it easy to attach the shelf member 20 to the second horizontal beam member 15 while suppressing the movement of the shelf member 20 in the Z direction using the elastic force of the flat plate member formed of metal.

The plurality of shelf members 20 of the rack 10 of the above embodiment are arranged at intervals in the X direction, and the shelf member 20 has the support surface 21 in which the first support surface 21A and the second support surface 21B are provided in a pair in the X direction, and the guide surface formed between the first support surface 21A and the second support surface 21B in the X direction, projecting upward from the first support surface 21A and the second support surface 21B, and extending in the Y direction. The shelf member 20 of the present embodiment holds the cargo T by supporting a right end of the cargo T in the X direction from below by the first support surface 21A of one of the shelf members 20 adjacent to each other, and supporting a left end of the cargo T in the X direction from below by the second support surface 21B of the other of the shelf members 20 adjacent to each other. In addition, in the shelf member 20 of the present embodiment, it is possible to prevent the cargo T from being displaced in the X direction by the guide surface 25.

In the rack 10 of the above embodiment, the shelf member 20 has the second projecting pieces 26 projecting in both directions in the X direction from the rear end of the guide surface 25 in the Y direction. This makes it possible to prevent the cargo T from jumping out from the rear side in the Y direction.

Although one embodiment has been described above, an aspect of the present invention is not limited to the above embodiment. Various modifications can be made without departing from the gist of one aspect of the invention.

The conveyance device that is disposed in the automated warehouse 1 and transports the cargo T may be any type of device, and for example, may include a transport device such as a stacker crane provided to be able to travel in the X direction and to be able to move in the Z direction.

In the above embodiment and the above modifications, an example in which the first horizontal beam member 13 also serves as the rails 51 of the traveling carriage 53 has been described, but the first horizontal beam member 13 and the rails 51 may be provided separately. In this case, the rails 51 are provided along the first horizontal beam member 13 on the front side of the first horizontal beam member 13 in the Y direction. In addition, in a case where the conveyance device such as the stacker crane is provided as described above, the rails 51 are provided on the floor surface or the like on which the rack 10 is installed.

In the above embodiment and the above modifications, the second horizontal beam member in which two pieces of lip channel steel are arranged has been described as an example, however, the second horizontal beam member may be made of one piece of lip channel steel or may be made of groove steel or the like having different sectional shapes.

The shelf member 20 of the above embodiment and the above modifications has been described by taking an example in which the guide surface 25 is formed, but the shelf member 20 may be formed only of the flat support surface 21 without the guide surface 25 being formed. In this case, by forming a size of the support surface 21 so that one or a plurality of cargoes T can be placed, one or a plurality of cargoes T can be held in one shelf member 20.

An example in which the first projecting piece 22 of the shelf member 20 of the above embodiment and the above modifications is bent to project at a central portion in the Y direction has been described, but the first projecting piece 22 may be formed linearly without being bent.

The third engaging surface 29C of the rear engaging portion 29 of the shelf member 20 of the above embodiment and the above modifications has been described by taking an example in which the third engaging surface 29C is inclined downward from the rear side toward the front side in the Y direction, but may extend in the horizontal direction from the rear side toward the front side. That is, the first engaging surface 29A, the second engaging surface 29B, and the third engaging surface 29C may be formed in a U-shape when viewed from the X direction.

The technical subject matter of one aspect of the present invention may be described as follows.
[1] A rack of an automated warehouse extending in a first direction, capable of arranging a plurality of cargoes in the first direction, and capable of transferring the cargoes from one side in a second direction orthogonal to the first direction in a horizontal direction, the rack including:
   a first horizontal beam member extending in the first direction;
   a second horizontal beam member extending in the first direction, disposed to face the first horizontal beam member in the second direction, and disposed on an other side in the second direction with respect to the first horizontal beam member; and
   a shelf member disposed to span between the first horizontal beam member and the second horizontal beam member and holding the cargo, wherein
   the first horizontal beam member includes a first upper surface inclined downward from the one side toward the other side, a rear side surface extending downward from an end portion of the first upper surface on the other side and orthogonal to the second direction, and a pair of beam holes penetrating in a thickness direction across the first upper surface and the rear side surface, the pair of beam holes penetrating through the rear side surface so as to form projecting portions projecting in directions facing each other,
   the second horizontal beam member includes an engaged portion to be engaged by one end portion of the shelf member and an insertion hole penetrating through a second upper surface orthogonal to a vertical direction in a thickness direction, and
   the shelf member is formed by bending a plate-like member, and includes:
      a support surface configured to support the cargo from below;
      a first projecting piece provided to project to the one side from an end portion on the one side of the support surface and being in contact with the first upper surface of the first horizontal beam member;
      a pair of insertion surfaces respectively formed to be insertable into the pair of beam holes in the first horizontal beam member, the pair of insertion surfaces each being formed with an engaging hole into which each of the projecting portions is engaged when the pair of insertion surfaces are respectively inserted into the pair of beam holes;
      a rear engaging portion engaging the engaged portion of the second horizontal beam member; and
      a latch portion inserted into the insertion hole in a state where the engaged portion of the second horizontal beam member is engaged by the rear engaging portion.
[2] The rack of an automated warehouse according to [1], in which
   the first projecting piece has a first surface inclined upward from an end portion on the one side of the support surface toward the one side, and a second surface inclined downward from an end portion on the one side of the first surface toward the one side, and
   the second surface is in contact with the first upper surface of the first horizontal beam member.
[3] The rack of an automated warehouse according to [2], in which the second surface and the first upper surface are in contact with each other such that an inclination direction of the second surface and an inclination direction of the first upper surface intersect each other.
[4] The rack of an automated warehouse according to any one of [1] to [3], in which
   the rear engaging portion includes a first engaging surface extending in the second direction, a second engaging surface extending downward in the vertical direction from an end portion on the other side of the first engaging surface, and a third engaging surface extending toward the one side in the second direction from an end portion on a lower side in the vertical direction of the second engaging surface, and
   the third engaging surface is inclined downward from the other side toward the one side.
[5] The rack of an automated warehouse according to any one of [1] to [4], in which
   the shelf member is arranged as a plurality of shelf members at intervals in the first direction,
   the shelf members each include the support surface provided in a pair such that a first support surface and a second support surface face each other in the first direction, and a guide surface formed between the first support surface and the second support surface in the first direction, projecting upward from the first support surface and the second support surface, and extending in the second direction, and
   the guide surface is formed by bending a plate-like member between the first support surface and the second support surface in the first direction.
[6] The rack of an automated warehouse according to [5], in which the shelf members each have second projecting pieces projecting in both directions in the first direction from an end portion of the guide surface on the other side in the second direction.

### Reference Signs List

- 1: automated warehouse
- 10: rack (rack of automated warehouse)
- 11: pillar member
- 13: first horizontal beam member
- 13C: upper surface (first upper surface)
- 13D: rear side surface
- 15: second horizontal beam member
- 15A: first lip channel steel
- 15B: second lip channel steel
- 20: shelf member
- 21: support surface
- 21A: first support surface
- 21B: second support surface
- 22: first projecting piece
- 22A: first surface
- 22B: second surface
- 23: insertion surface
- 23A: engaging hole
- 25: guide surface
- 26: second projecting piece
- 27: front engaging portion
- 29: rear engaging portion
- 29D: latch portion
- 50: first conveyance device
- 51: rail
- 53: traveling carriage
- 130: beam hole
- 133: projecting portion

## Claims

1. A rack of an automated warehouse extending in a first direction, capable of arranging a plurality of cargoes in the first direction, and capable of transferring the cargoes from one side in a second direction orthogonal to the first direction in a horizontal direction, the rack comprising:
a first horizontal beam member extending in the first direction;
a second horizontal beam member extending in the first direction, disposed to face the first horizontal beam member in the second direction, and disposed on an other side in the second direction with respect to the first horizontal beam member; and
a shelf member disposed to span between the first horizontal beam member and the second horizontal beam member and holding the cargo, wherein
the first horizontal beam member includes a first upper surface inclined downward from the one side toward the other side, a rear side surface extending downward from an end portion of the first upper surface on the other side and orthogonal to the second direction, and a pair of beam holes penetrating in a thickness direction across the first upper surface and the rear side surface, the pair of beam holes penetrating through the rear side surface so as to form projecting portions projecting in directions facing each other,
the second horizontal beam member includes an engaged portion to be engaged by one end portion of the shelf member and an insertion hole penetrating through a second upper surface orthogonal to a vertical direction in a thickness direction, and
the shelf member is formed by bending a plate-like member, and includes:
a support surface configured to support the cargo from below;
a first projecting piece provided to project to the one side from an end portion on the one side of the support surface and being in contact with the first upper surface of the first horizontal beam member;
a pair of insertion surfaces respectively formed to be insertable into the pair of beam holes in the first horizontal beam member, the pair of insertion surfaces each being formed with an engaging hole into which each of the projecting portions is engaged when the pair of insertion surfaces are respectively inserted into the pair of beam holes;
a rear engaging portion engaging the engaged portion of the second horizontal beam member; and
a latch portion inserted into the insertion hole in a state where the engaged portion of the second horizontal beam member is engaged by the rear engaging portion.

2. The rack of an automated warehouse according to claim 1, wherein
the first projecting piece has a first surface inclined upward from an end portion on the one side of the support surface toward the one side, and a second surface inclined downward from an end portion on the one side of the first surface toward the one side, and
the second surface is in contact with the first upper surface of the first horizontal beam member.

3. The rack of an automated warehouse according to claim 2, wherein the second surface and the first upper surface are in contact with each other such that an inclination direction of the second surface and an inclination direction of the first upper surface intersect each other.

4. The rack of an automated warehouse according to any one of claims 1 to 3, wherein
the rear engaging portion includes a first engaging surface extending in the second direction, a second engaging surface extending downward in the vertical direction from an end portion on the other side of the first engaging surface, and a third engaging surface extending toward the one side in the second direction from an end portion on a lower side in the vertical direction of the second engaging surface, and
the third engaging surface is inclined downward from the other side toward the one side.

5. The rack of an automated warehouse according to any one of claims 1 to 4, wherein
the shelf member is arranged as a plurality of shelf members at intervals in the first direction,
the shelf members each include the support surface provided in a pair such that a first support surface and a second support surface face each other in the first direction, and a guide surface formed between the first support surface and the second support surface in the first direction, projecting upward from the first support surface and the second support surface, and extending in the second direction, and
the guide surface is formed by bending a plate-like member between the first support surface and the second support surface in the first direction.

6. The rack of an automated warehouse according to claim 5, wherein the shelf members each have second projecting pieces projecting to one side and the other side in the first direction from an end portion of the guide surface on the other side in the second direction.
